# EUROPEAN PATENT APPLICATION

(11) **EP 4 818 103 A1**
(43) Date of publication of application: **07.10.2026**
(21) Application number: 25167451.1
(22) Date of filing: 31.03.2025
(51) Int. Cl.: B66C 13/40, B66C 23/42, B66C 23/00

(54) **OPERATING A WORKING EQUIPMENT ARRANGEMENT BY TRANSMITTING AN INSTRUCTION**

(71) Applicant: Hiab AB, 215 32 Malmö (SE)
(72) Inventor: Lindström, Elin, SE-824 30 Hudiksvall (SE); Östberg, Angelika, SE-824 91 Hudiksvall (SE); Asp, Erik, SE-824 42 Hudiksvall (SE)
(74) Representative: Bjerkén Hynell KB

(57) **Abstract**

A method (100) of operating a working equipment arrangement (1) for load handling comprising
- receiving (110) a set of sensor input data from a sensor system (10),
- determining (120) a set of present working conditions of the working equipment arrangement (1) based on the received set of sensor input data,
- receiving (130) operator input data from an operator interface device (20),
- controlling (140) the load handling based on the received operator input data and the determined set of present working conditions,
- generating (150) an instruction for an operator of the working equipment arrangement (1), the instruction being based on the set of present working conditions and being indicative of a recommended next operator input data, and
- transmitting (160) the generated instruction to an instruction interface device (40) arranged to provide the generated instruction to the operator.

## Description

### Technical field

The present disclosure generally pertains to working equipment for load handling, and more particularly relates to a method of operating a working equipment arrangement for load handling and to a working equipment arrangement for load handling.

### Background

Working equipment for load handling may be complex to operate in a safe and efficient manner. For example, when operating truck-mounted loader cranes for loading and unloading recycling bins or building materials, the operation may be complex as consideration must be given to the actual load, the specific assignment, and the surrounding environment.

Operators of working equipment used for load handling rely on feedback to ensure accurate, safe, and efficient operation. Traditionally, information about load handling and the status of the working equipment is obtained by the operator through direct observation of the load handling process, sometimes supported by visual indicators on the working equipment or on a remote control. The load handling may in addition be aided by various indicators such as blinking lights or display screens. In some cases, audio signals or remote control haptic feedback may be used to confirm operator inputs or warn of critical conditions.

The patent publication JPH11228074A discloses a working equipment in the form of a mobile crane configured to be mounted on a vehicle. The crane is controlled via a portable operation input unit that communicates, either wired or wirelessly, with a hydraulic control device to operate multiple hydraulic actuators. To reduce the risk of erroneous operation, the portable operation input unit is adapted to generate distinct sound signals for each control input, enabling the operator to distinguish between different commands.

Even though the available solutions for working equipment load handling function satisfactorily, there is still room for improvement for example in terms of efficiency, ease of operation, and cost-effectiveness.

### Summary

An object of the present invention is to overcome the drawbacks of prior art working equipment operation solutions. The invention is exemplified through the embodiments disclosed herein.

In accordance with one aspect, the present disclosure provides a method of operating a working equipment arrangement for load handling. The working equipment arrangement comprises a movable arm for moving a load from a first position to a second position, the arm comprising a plurality of arm sections, pivot joints or telescopic connections joining the arm sections, a set of actuators for operating movements of the arm sections, and a load manipulator for engaging the load during the load handling. A sensor system comprising a plurality of sensor units is arranged to monitor present positions of the plurality of arm sections and the operational status of the working equipment arrangement. An operator interface device, such as a remote manoeuvring unit, is configured to receive operator input data for the load handling. A controller is configured to process sensor input data, determine working conditions, receive operator input data, and control the load handling operation.

The method comprises receiving a set of sensor input data from the sensor system, determining a set of present working conditions of the working equipment arrangement based on the received set of sensor input data, and receiving operator input data from the operator interface device. The method further comprises controlling the load handling with the movable arm based on the received operator input data and the determined set of present working conditions.

The method further comprises generating an instruction for an operator of the working equipment arrangement, the instruction being based on the set of present working conditions and being indicative of a recommended next operator input data, and transmitting the generated instruction to an instruction interface device arranged to provide the generated instruction to the operator.

An advantage of the present disclosure may be improved situational awareness for the operator, leading to increased efficiency and safety. The operator typically receives, or can obtain, information related to the operation of the working equipment arrangement through visual observation, display screens, warning signals, and/or haptic feedback from control levers or joysticks of a remote manoeuvring unit, as mentioned in the background section above. By providing an instruction, which typically specifies at least one action to be performed by the operator, the present disclosure may ensure that relevant or necessary guidance continuously reaches the operator in efficient manner. Since the instruction interface device is arranged to provide the generated instruction to the operator in the actual load handling situation, the present disclosure may ensure that the instruction is successfully conveyed.

The present disclosure may provide advantages in view of the limited availability of skilled and experienced operators for load handling working equipment. Operating such equipment takes time to learn, and even for skilled operators there is a continued need to make operations more time-efficient, energy-efficient, safe, and optimized from a performance perspective.

Merely as one example, when operating a truck-mounted loader crane for handling recycling bins, the operator must consider the navigation of both the crane and the carried bin, which may be heavy and bulky, while simultaneously managing a specific assignment that may involve loading or unloading close to a domestic building or at a confined or hard-to-reach location. The operator must also pay attention to the surrounding environment, which may be crowded with traffic, and furthermore, the ground may be unstable. The present disclosure may involve accelerated learning, and in addition reduce the required level of operator experience and skill.

The instruction interface device may typically not form part of the working equipment arrangement itself but may instead be a separate device, such as a headset. As a result, no additional hardware may be needed in the working equipment arrangement, making the solution easily scalable, cost-efficient, and quick to implement. The data transfer connection between the typically portable remote manoeuvring unit and the working equipment arrangement already exists, ensuring seamless integration of the disclosed method. The instruction interface device, e.g. a headset, may typically be connected to the operator interface device. The instruction interface device may typically be connected to the operator interface device via a wired connection or via a wireless communication technique such as Bluetooth.

Many working equipment arrangements include built-in safety features that halt or slow down movement e.g. if there is a risk of imbalance or overload. Through the present disclosure, an instruction can be provided to the operator, allowing the operator to understand how to manoeuvre the working equipment arrangement to exit a stability warning or an overload safely. Another advantage of the instruction is that it may significantly simplify the tasks to be performed by the operator, thereby substantially reducing the cost and time required for training or onboarding new operators.

For instance, the instruction may comprise or consist of an indication to lower a specific arm section, decrease a movement speed, or extend a specific stabilizer. A stabilizer may be referred to as a stabilizer leg or an outrigger, which may be directly mechanically connected to the movable arm, or part of the working equipment arrangement, or mounted to a vehicle on which the working equipment arrangements is installed. The instructions generated in accordance with the present disclosure may further be used when performing a test sequence for a vehicle with the working equipment, such as a Vertical Stability Limit (VSL) test.

Notably, the patent publication JPH11228074A does not relate to the generation of instructions, or the provision of instructions based on detected working conditions. Moreover, JPH11228074A does not disclose transmitting any message or signal to an instruction interface device. Monotone warning signals generated by the portable operation input unit do not constitute instructions indicative of a recommended next operator input data as described herein. Similarly, other means for communicating a general warning or alert to a driver or operator, such as blinking lights or remote control haptic feedback of prior art solutions, are not instructions indicative of a recommended next operator input data.

Optionally, the instruction interface device comprises an audio transducer, and the method comprises providing the generated instruction as audio. An advantage of using audio instructions may be that the operator, who already receives visual information from multiple sources and possibly receives tactile feedback, can receive the instruction while maintaining focus on the load handling, the working equipment arrangement, and the surroundings.

Optionally, the instruction is provided in the form of spoken language. Advantages of spoken instructions may involve the ability to convey complex guidance in an intuitive and readily comprehensive manner, reducing the need for extensive training or experience. Spoken language instructions may be structured to include multiple steps, and both tone and loudness may be varied to emphasize urgency and importance, when appropriate. Moreover, such instructions may be given in different languages, ensuring accessibility for a diverse range of operators and countries. The spoken instructions may be synthesized or pre-recorded. Optionally, the spoken instructions are stored in or generated by the controller. With spoken language instructions the operator of the working equipment arrangement can still monitor the working environment visually while receiving and executing the instructions.

Optionally, the working equipment arrangement may be configured such that the level or amount of instruction may be selectively set by an operator. The method may comprise receiving an instruction level from the operator, which instruction level is indicative of how much instruction is desired or required by the operator. The instruction level may also indicate what type of instructions are desired, and for which situations instructions are desired. The method may comprise receiving a test command from the operator, and wherein the instruction generated is related to performing a test sequence. The present method and arrangement may be configured such that the spoken language instruction may be customised, e.g. the level of detail and speed of spoken language instructions may be customisable. In addition, certain types of instruction may selectively be activated or deactivated, as an experienced operator may not require the same instructions as an operator who is in a learning phase, and as some loading operations may be extra delicate and require specific instructions.

Optionally, the instruction interface device comprises an augmented reality device or a virtual reality device, and the generated instruction is provided as a graphical overlay. Thereby, clear and precise instructions may be presented to an operator, e.g. an operator with limited experience, enhancing ease of operation. The graphical overlays may comprise arrows or similar symbols for visualising an instruction of a movement associated with the load handling or any part of the working equipment arrangement. The graphical overlay may be added to a real-time camera stream.

Optionally, the instruction interface device comprises an audio transducer, the instruction being provided as spoken language, and/or the instruction interface device comprises an augmented reality device or a virtual reality device and the generated instruction is provided as a graphical overlay.

Optionally, a set of instructions, i.e. multiple instructions, for an operator is generated and transmitted to the instruction interface device for presentation to the operator. Advantages may include the ability to guide the operator in performing complex control tasks, ensuring precise operation of the working equipment arrangement, typically its movable arm or stabilizers.

Optionally, a set of instructions may be transmitted in a sequence, wherein each instruction is presented step-by-step. As a result, the operator does not need to memorize a sequence before execution, which may simplify handling and reduce required operator experience and skill. The working equipment arrangement may be adapted to continuously monitor the present positions of the plurality of arm sections and the operational status of the working equipment arrangement, and to provide instructions in sequence, step-by-step, as the respective instructions are completed by the operator.

Optionally, the generated set of instructions comprises a first recommended operator input data relating to a first actuator and a sequential second recommended operator input data relating to a second actuator. An advantage of this feature may be that the operator can receive simple, step-by-step guidance, facilitating advanced control of the working equipment arrangement, particularly its movable arm. The instructions may comprise information about levers, buttons or joystick interactions on the operator interface device to actuate or work with. The instructions may in addition, or as an alternative, comprise arms to raise or lower, or other parts of the working equipment arrangement to rotate, lower, raise, or tilt. Optionally, the set of present working conditions corresponds to the manipulator being in a present position, and the operator input data comprises a set of target working conditions corresponding to the manipulator being in a predefined target position. For example, the set of target working conditions may correspond to the movable arm being in a stowed or folded position or may correspond to an arm position required during a test. The generated set of instructions may comprise recommended operator input data to move the manipulator from the present position to the target position. The instruction may further comprise an operator input to be continued until a preset loading, e.g. a present hydraulic pressure, is obtained. Thereby, the manipulator may be moved efficiently and safely while ensuring that the instructions remain easy to follow.

Optionally, if a set of present working conditions comprises an alert state for the working equipment arrangement, the generated instruction involves returning the working equipment arrangement to a non-alert state for operation. Advantages of this feature may involve enabling the operator to quickly, efficiently, and safely restore the working equipment arrangement from conditions such as overload or imbalance. The instruction may, for example, suggest adjusting a stabilizer, reducing movement speed, or modifying the orientation of the movable arm. The alert state may e.g. concern an overload situation or stability issue that has been identified.

Optionally, the generated instruction involves positioning at least one of the plurality of arm sections of the movable arm for increasing lifting capacity of the working equipment arrangement. As a result, the movable arm may be quickly, efficiently, and safely positioned to increase lifting capacity, ensuring efficient utilisation of the working equipment arrangement.

Optionally, the operator input data comprises a set of target working conditions. The set of target working conditions may vary depending on the context or application, as mentioned above. For example, the target working conditions may be defined to mitigate an overload situation or to adjust the orientations of the arm sections to enable increased lifting capacity. Advantages of this feature may involve enabling more advanced and, in some cases, partially automated control of the working equipment arrangement.

Optionally, the method comprises managing a communication session between the working equipment arrangement and a portable electronic device. The portable electronic device may be a handheld computational device, such as a mobile phone (smartphone) or a laptop. The above-defined generating an instruction for an operator of the working equipment arrangement may be performed by the portable electronic device. The spoken instructions may be stored in or generated by the portable electronic device. Advantages involve that the working equipment arrangement, such as its controller, can be dedicated to controlling the load handling, rather than generating the instruction. For safety reasons, it may be beneficial to configure the present method and the present arrangement such that the controller is substantially dedicated to controlling the load handling. Other advantages include that the present method may be implemented on existing working equipment arrangement with little adaptation, and that updates (adding languages, adding new instructions, clearing bugs, etc) associated with the generation of the instruction do not require any modifications of the working equipment arrangement. Thus, the controller, or a separate device of the working equipment arrangement that is in communication with the controller, may via the communication session transfer the sensor input data and/or the present working conditions and/or the operator input data to the portable electronic device so that the portable electronic device may generate the instruction for the operator of the working equipment arrangement.

The portable electronic device may communicate with the working equipment arrangement via a wireless communication network. The wireless communication network may include, but is not limited to, mobile cellular networks such as 3G, 4G, or 5G. The portable electronic device may communicate with the working equipment arrangement via a wireless communication technique such as Bluetooth.

Optionally, the method comprises managing a further communication session between the working equipment arrangement and an external or remote controller, such as an external or remote server or cloud server. The above-defined generating an instruction for an operator of the working equipment arrangement may be performed by the remote controller. The spoken instructions may be stored in or generated by the remote controller. The advantages are similar to those mentioned in relation to having the portable electronic device to performing the task of generating the instruction. Thus, the controller, or a separate device of the working equipment arrangement that is in communication with the controller, may via a further communication session over the wireless communication network transfer the sensor input data and/or the present working conditions and/or the operator input data to the remote controller so that the remote controller may generate the instruction for the operator of the working equipment arrangement.

Optionally, the remote controller (e.g. cloud server) may communicate with the portable electronic device (e.g. mobile phone) via the wireless communication network.

The method may comprise all, or at least some, of the computation involved with generating the instruction for the operator being performed by
the portable electronic device,
the operator interface device,
the remote controller,
the controller of the working equipment arrangement, and/or by
the separate device of the working equipment arrangement that is in communication with
the controller of the working equipment arrangement.

Optionally, the method comprises performing a test of the working equipment arrangement, such as a Vertical Stability Limit test for a working equipment arrangement in the form of a loader crane. The method may significantly simplify the execution of such tests. In some cases, the test may be performed by a single operator instead of two, as the instruction for the operator may eliminate the need for a separate operator to provide instructions or guidance. The working equipment arrangement may consist of a loader crane.

Optionally, the operator interface device is a remote manoeuvring unit of the working equipment arrangement.

Optionally, the method is used for operating a working equipment arrangement. The use of the disclosed method may enable effective and safe operation of the working equipment arrangement in combination with an instruction interface device, which may be separate from the working equipment arrangement.

Optionally, the method is used for performing a test of the working equipment arrangement, such as a Vertical Stability Limit test for a working equipment arrangement in the form of a loader crane. The use of this method may significantly simplify the execution of such tests. In some cases, the test may be performed by a single operator instead of two operators, as the instruction interface device may eliminate the need for a separate operator to provide instructions or guidance.

Optionally, the method comprises generating an instruction for an operator of the working equipment arrangement, the instruction being based on the set of present working conditions and on the received operator input data and being indicative of a recommended next operator input data. By taking the received operator input data into account, the instruction may reflect the intended action of the operator, ensuring that accurate, context-aware, and timely guidance is provided.

An operator input may correspond to the manual actuation of a control lever of the operator interface device. The control lever may for example be pivotable in a first direction for lifting an arm section and pivotable in a second, opposite direction, for lowering the arm section. Operator input data may correspond to lever actuation, position or rotational angle. The operator input data may be an electronic or electric signal or an electronic message representing the lever actuation, position or rotational angle.

Operating the working equipment arrangement may correspond to the operator controlling the working equipment arrangement in a load handling process or to the operator configuring or ting the working equipment arrangement.

In accordance with another aspect, the present disclosure provides a computer program product comprising computer-executable instructions which, when executed by the portable electronic device, cause the portable electronic device to carry out at least a part of the method. In particular, the portable electronic device may generate the instruction for the operator of the working equipment arrangement, the instruction being based on the set of present working conditions and being indicative of a recommended next operator input data. Advantages involve that the working equipment arrangement, such as its controller, is relieved from the computational task of generating the instruction. The portable electronic device may transmit the generated instruction to the instruction interface device. As mentioned, the portable electronic device may be a mobile phone, and the computer program product may be referred to as an app or a smartphone app.

In accordance with a general aspect, the present disclosure provides a method of operating a working equipment arrangement for load handling, the method comprising receiving a set of sensor input data from a sensor system of the working equipment arrangement, determining a set of present working conditions of the working equipment arrangement based on the received set of sensor input data, receiving operator input data from an operator interface device, controlling the load handling based on the received operator input data and the determined set of present working conditions, generating an instruction for an operator of the working equipment arrangement, the instruction being based on the set of present working conditions and being indicative of a recommended next operator input data, and transmitting the generated instruction to an instruction interface device arranged to provide the generated instruction to the operator.

In accordance with another aspect, the present disclosure provides a working equipment arrangement for load handling. The working equipment arrangement comprises a movable arm for moving a load from a first position to a second position, the arm comprising a plurality of arm sections joined by pivot joints or telescopic connections, a set of actuators for operating movements of the arm sections, and a load manipulator for engaging the load during the load handling. The working equipment arrangement further comprises a sensor system including a plurality of sensor units for monitoring the present positions of the plurality of arm sections and for monitoring the operational status of the working equipment arrangement. An operator interface device, such as a remote manoeuvring unit e.g. for an operator standing in the vicinity of the working equipment or sitting in a cabin of vehicle, e.g. a truck, on which the working equipment arrangement is mounted, is configured to receive operator input data for load handling. A controller is arranged to receive a set of sensor input data from the sensor system, determine a set of present working conditions of the working equipment arrangement based on the received sensor input data, receive operator input data from the operator interface device, and control the load handling with the movable arm based on the received operator input data and the determined set of present working conditions. The working equipment arrangement is further arranged to generate an instruction for an operator, the instruction being based on the set of present working conditions and being indicative of at least one recommended operator input data, and arranged to transmit the generated instruction to an instruction interface device arranged to provide the generated instruction to the operator.

Advantages and further possible features of the general aspect and of the working equipment arrangement correspond to those mentioned in connection with the method of operating the working equipment arrangement.

In accordance with another aspect, the present disclosure provides a loader crane configured to be mounted on a vehicle. The working equipment arrangement may be configured to be mounted on a vehicle, to load and unload the vehicle. Said vehicle may be a transport vehicle, such as a truck.

Further advantages and associated advantageous features of the invention are disclosed in the following description and defined in the dependent claims.

### Brief description of the drawings

Figure 1 shows a working equipment arrangement mounted on transport vehicle, and illustrates an operator carrying an operator interface device and wearing an instruction interface device.
Figure 2 illustrates a method of operating a working equipment arrangement for load handling.

### Detailed description

Exemplifying embodiments of the working equipment arrangement and the method of operating a working equipment arrangement will now be described in detail with references to the appended figures.

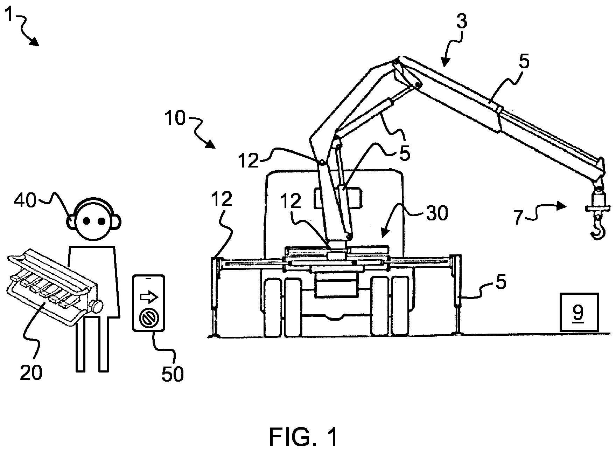

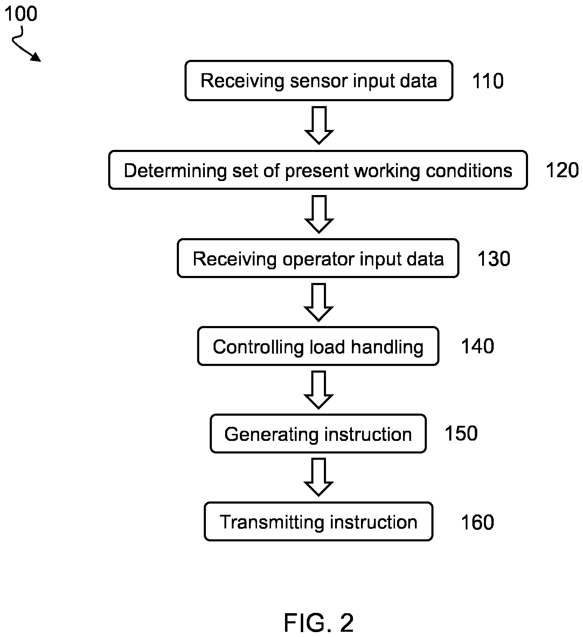

Figure 2, best understood in connection with figure 1, discloses a method 100 of operating a working equipment arrangement 1 for load handling. The method 100 may comprise operating the working equipment arrangement shown in figure 1.

As is shown in figure 1, the present working equipment arrangement 1 comprises a movable arm 3 for moving a load 9 from a first position to a second position. For example, the load 9 may be loaded or unloaded from a vehicle, such as a transport vehicle in the form of a truck. The movable arm 3 comprises a plurality of arm sections, pivot joints or telescopic connections joining the arm sections and a set of actuators 5 for operating movements of the arm sections. The working equipment arrangement 1 further comprises a load manipulator 7, here exemplified as a hook, for engaging the load 9 during the load handling.

Actuators 5 here exemplified hydraulic actuators, including hydraulic cylinders, are provided for moving the arm , the arm sections, stabilizer legs and extension of those, and the load manipulator. There are typically undepicted hydraulic pumps and valves connected to the hydraulic actuators, forming part of a hydraulic system. The actuators 5 may further be electro-mechanical actuators or electro-hydraulic actuators, the system of actuators may further comprise a combination of hydraulic, electro-mechanical and electro-hydraulic actuators.

The working equipment arrangement may optionally also comprise a number of stabilizers, two shown in figure 1, to stabilise the working equipment arrangement and/or the vehicle. The stabilizers may, as shown, comprise telescopic members extendible horizontally and vertically. The stabilizers may be extended laterally from the working equipment arrangement and may be extended downwards towards the ground as required to obtain adequate support or stability. As the focus of the present disclosure is not on the basic design of the working equipment arrangement, but rather on how it is operated and configured for efficient operation, the basic design of the working equipment arrangement is not described in detail herein.

The working equipment arrangement 1 further comprises a sensor system 10 comprising a plurality of sensor units 12 for monitoring present positions of the plurality of arm sections and for monitoring the operational status of the working equipment arrangement 1. As indicated in figure 1, there may be sensor units 12 provided to monitor positions of the arm sections and stabilizers. There may be sensor units 12 provided to monitor hydraulic oil pressures of hydraulic actuators, to monitor the present load on the respective movable arm sections and stabilizers. Examples of sensor units include rope sensors, angle sensors, position and length sensors (such as magnetostrictive linear position sensors), pressure and flow sensors, accelerometers, inertial measurement units, image sensors, cameras, LIDARs, and radars.

As shown in figure 1, an operator interface device 20 (enlarged in the figure), exemplified as a remote manoeuvring unit, is provided for receiving operator input data for the load handling. The operator interface device 20 may be arranged to receive operator input, for example by including a control lever that is manually actuated by the operator. Six control levers are shown in figure 1. The operator interface device 20 may comprise other control means such as buttons, joysticks, or menu-selection displays, etc. The operator interface device 20 may convert the operator input to operator input data. The operator interface device 20 is illustrated as being carried by the operator. Typically, the operator interface device 20 comprises an undepicted neck band to facilitate carrying. The working equipment arrangement 1 may in addition comprise an undepicted fixed operator interface (arranged on the movable arm or on a vehicle on which the working equipment arrangement 1 is mounted), e.g. comprising a touch screen or buttons/levers for input of operator input data.

The operator interface device 20 may be configured to communicate with the controller 30 via a local wireless communication link. For example, the communication may be established via a short-range radio connection, such as a dedicated industrial radio system operating in an unlicensed frequency band, e.g. at 2.4 GHz.

As schematically denoted in figure 1, the working equipment arrangement 1 comprises a controller 30 arranged to receive a set of sensor input data from the sensor system 10, determine a set of present working conditions of the working equipment arrangement 1 based on the received set of sensor input data, receive operator input data from the operator interface device 20, and control the load handling with the movable arm 3 based on the received operator input data and the set of present working conditions. Typically, the controller 30 is arranged to control actuators, and in the case of hydraulic actuators the hydraulic system including pumps and valves connected to the hydraulic actuators, in a manner known per se and not described in detail herein.

Thus, the disclosed method 100 comprises receiving 110, for example by the controller 30, a set of sensor input data from the sensor system 10. The set of sensor input data typically comprises a plurality of data representing positions of the arm sections. Further, the set of sensor input data may comprise data representing positions of the stabilizers. In addition, the set of sensor input data may comprise data representing hydraulic pressures of actuators for operating movements of the working equipment arrangement 1, which may be indicative of the present load weight. Other plausible sensor input data includes operation state of the working equipment arrangement and environmental parameters such as ambient temperature.

The method 100 further comprises determining 120, typically by the controller 30, a set of present working conditions of the working equipment arrangement 1 based on the received set of sensor input data. The determined set of present working conditions may comprise the orientation and loading of the movable arm 3. When multiple arm section positions, typically including a swivel position of the movable arm and relative angular settings and telescopic extension settings of the arm sections are considered, this may be referred to as the orientation or posture of the movable arm 3. Thus, the determined set of present working conditions may represent the present orientation or posture of the movable arm. The determined set of present working conditions may represent the present loading of the movable arm, e.g. by taking hydraulic pressures into account, stability parameters, and a maximum reach for a present load, e.g. based on a setting of stabilizers.

The method further comprises receiving 130 operator input data from the operator interface device 20 and controlling 140 the load handling with the movable arm 3 based on the received operator input data and the determined set of present working conditions. These tasks are typically performed by the controller 30. Merely as an example, the determined set of present working conditions may represent the load manipulator 7 being positioned approximately 1 metre above the load 9 on the ground at a lateral side of the vehicle, as shown in figure 1. The total loading of the movable arm 3 may be relatively low, as no load is carried by the load manipulator 7. In this situation, the operator input data may represent the operator actuating a lever of the operator interface device 20 to lower the load manipulator 7. The controlling 140 may now result in actuating the hydraulic system to lower the movable arm 3 such that the load manipulator 7 is brought to the load 9. In some detail, several actuators 5 of the movable arm 3 may be activated to change the mutual angles between the arm sections. Next, the load manipulator 7 may engage the load 9 to lift the load 9. Operator input data may now command lifting the load manipulator 7 and the load 9. Should, for example, the load 9 be too heavy to be lifted by the working equipment arrangement 1, the next paragraph will apply.

The method comprises generating 150 an instruction for an operator of the working equipment arrangement 1. The instruction is based on the set of present working conditions and is indicative of a recommended next operator input data. Continuing the example of the previous paragraph, the instruction may e.g. comprise "lower the first arm section" or "decrease the movement speed". In addition to the instruction, the method may comprise generating a status message, such as e.g. "overload". A multiple-step instruction may comprise sequential instructions to set the load down and extend one or more stabiliser horizontally and/or vertically. The generated instruction is transmitted 160 to an instruction interface device 40 arranged to provide the generated instruction to the operator. The instruction interface device 40 is exemplified as a headset worn by the operator in figure 1. The headset may provide the instruction to the user as a spoken language message.

Typically, determining 120 a set of present working conditions of the working equipment arrangement 1 and receiving 130 operator input data from the operator interface device 20 is performed concurrently. Typically, the method comprises continuously looping the actions comprised in the method.

In the illustrated example, the instruction interface device 40 thus comprises an audio transducer, and the method comprises providing the generated instruction to the operator as audio. The instruction may advantageously be provided as spoken language.

In undepicted examples, the instruction interface device 40 comprises an augmented reality device or a virtual reality device, and the method comprises providing the generated instruction as a graphical overlay.

The method may comprise generating a set of instructions for an operator of the working equipment arrangement 1 and transmitting the generated set of instructions to the instruction interface device 40 arranged to provide the generated set of instructions to the operator.

The method may comprise transmitting the generated set of instructions in a sequence to the instruction interface device 40 arranged to provide the generated set of instructions to the operator. Optionally, the generated set of instructions comprises a first recommended operator input data relating to a control of a first actuator 5 and a sequential second recommended operator input data relating to a control of a second actuator 5. The generated set of instructions may comprise recommended operator input data relating to control of a combination of actuators. For example, if a crane tip is to be moved vertically straight upwards, the operator be instructed to actuate not only one lever but two or more levers.

The working equipment arrangement may be configured to allow the operator to directly control a specific movement of e.g. the tip of the arm, rather than individually controlling each joint or arm section to achieve the specific movement. For example, the working equipment arrangement may be configured to allow the operator to directly control the tip of the arm to move straight vertically. This may be referred to as Crane Tip Control, wherein several actuators are involved in the same operator input to simplify the control, improve precision, and efficiency.

The set of present working conditions corresponds to the manipulator 7 being in a present position. The operator input data may comprise a set of target working conditions that correspond to the manipulator 7 being in a predefined target position. The generated set of instructions may comprise recommended operator input data to move the manipulator 7 from the present position to the target position.

If the set of present working conditions comprises an alert state for the working equipment arrangement 1, e.g. an overload state, then the generated instruction may involve returning the working equipment arrangement 1 to a non-alert state for operation.

The generated instruction may involve positioning at least one of the plurality of arm sections of the movable arm 3 for increasing lifting capacity, e.g. in addition to, or instead of, extending a stabilizer.

Thus, the working equipment arrangement 1 is configured for efficient operation and arranged to generate an instruction for an operator of the working equipment arrangement 1. The instruction is based on the set of present working conditions and is indicative of at least one recommended operator input data. The generated instruction may be transmitted to an instruction interface device 40 arranged to provide the generated instruction to the operator. The generated instruction may advantageously be provided to the operator as spoken language. For example, as shown and discussed, the instruction interface device 40 may advantageously be a headset worn by the operator.

The controller 30, which may be referred to as an equipment controller, may be responsible for performing the method 100, which is a computer-implemented method. However, some of the computational tasks of the controller 30 may be performed by an external or remote controller, such as a remote server. The controller may be configured to communicate with the remote controller over a wireless communication network. The remote controller may be referred to as a cloud server.

Figure 1 illustrates a portable electronic device 50, exemplified as a mobile phone (enlarged in the figure). In some embodiments of the present disclosure, the instruction or instructions for the operator may be generated by the portable electronic device. The method 100 and the working equipment arrangement 1 may involve or be configured to manage a communication session between the working equipment arrangement 1 and the portable electronic device 50, e.g. via the remote server.

In view of the foregoing paragraph, the present disclosure further provides a computer program product comprising computer-executable instructions which, when executed by the portable electronic device 50, cause the device 50 to generate 150 the instruction for the operator of the working equipment arrangement 1, said computer-executable instructions being based on the set of present working conditions and being indicative of a recommended next operator input data. Optionally, the instruction or instructions for the operator may at least in part be generated by the remote controller.

In figure 1 a loader crane is shown as an exemplifying embodiment. Thus, the herein described working equipment arrangement 1 may be a loader crane. The working equipment arrangement 1 may comprise a loader crane. Alternatives to the loader crane are e.g. a skip loader, a forestry crane, a recycling crane, a hooklift, a forklift, and a tail lift.

One detailed exemplifying embodiment will next be described, referring to figure 1. The working equipment arrangement 1 is here a loader crane adapted to be mounted on a truck. The truck-mounted loader crane comprises movable arm 3, a sensor system 10, a remote manoeuvring unit 20, and an equipment controller 30. The movable arm 3 has a plurality of arm sections, pivot joints or telescopic connections joining the arm sections, a set of actuators 5 for operating movements of the arm sections, and a hook 7 for engaging a load 9. The loader crane further comprises a pair of stabilizers with actuators 5 for horizonal and vertical movement, such that the loader crane may be adequately supported on the ground.

The equipment controller 30 is arranged to receive a set of sensor input data from the sensor system 10, determine a set of present working conditions of the loader crane based on the received set of sensor input data, receive crane operator input data from the remote manoeuvring unit 20 and control the load handling with the movable arm 3 based on the received crane operator input data and the set of present working conditions.

The equipment controller 30 of the loader crane is arranged to generate an instruction for the crane operator, the instruction being based on the set of present working conditions and being indicative of at least one recommended crane operator input data. The loader crane is further arranged to transmit the generated instruction from the controller 30 to the remote manoeuvring unit 20 that in turn transmits the instruction to a headset 40 worn by the operator, the headset then provides generated instruction to the crane operator as spoken language.

Now, optionally, the crane operator may have access to portable electronic device in the form of a smartphone 50 with an app downloaded thereon that may be used to generate the spoken language instruction for the crane operator. Thus, this computational task may be handled by the smartphone 50 instead of by the equipment controller 30. **In** some detail, this may be made possible by a communication session between the loader crane and a remote controller, and a further communication session between the remote controller and the smartphone. Thus, the smartphone 50 may be provided with the necessary data to generate the crane operator instruction via the communication sessions and the remote controller. The crane operator instruction may partially or entirely be generated by the remote controller. As is to be apprehended, the smartphone 50 itself, via its speaker, or a headset connected thereto, may provide the spoken language instruction to the operator. Moreover, the app may comprise setting options that may enable the crane operator to customize the instruction e.g. as regards language, level of detail and speed of the spoken language. Using the app, the crane operator may further launch a test process or a crane installation process, such that the crane operator may subsequently receive appropriate spoken language instruction for conducting a Vertical Stability Limit (VSL) or spoken language instruction for crane installation. If the test is launched, the instructions may sequentially tell the crane operator how to manoeuvre the movable arm 3 and the stabilizers to conduct the test. The setting options and test/installation start may alternatively, or in addition, be selected and initiated via the remote manoeuvring unit 20 or via a fixed operator interface on the loader crane or the truck.

In other embodiments, the crane operator instruction may partially or entirely be generated by the remote manoeuvring unit 20 or by an undepicted separate device in communication with the equipment controller 30.

It is to be understood that the invention is not limited to the particular embodiments and examples illustrated in the drawings and described herein; instead, it encompasses all modifications and variations within the scope of the appended claims. The actions of methods disclosed herein may be expressed either in the gerund form (e.g. generating, transmitting) or in the infinite form (e.g. to generate, to transmit).

## Claims

1. A method (100) of operating a working equipment arrangement (1) for load handling, the working equipment arrangement (1) comprising:
- a movable arm (3) for moving a load (9) from a first position to a second position and comprising a plurality of arm sections, pivot joints or telescopic connections joining the arm sections, a set of actuators (5) for operating movements of the arm sections, and a load manipulator (7) for engaging the load (9) during the load handling;
- a sensor system (10) comprising a plurality of sensor units (12) for monitoring present positions of the plurality of arm sections and for monitoring operational status of the working equipment arrangement (1);
- an operator interface device (20), such as a remote manoeuvring unit, for receiving operator input data for the load handling;
- a controller (30) configured to process sensor input data, determine working conditions, receive operator input data, and control the load handling operation;
the method comprising:
- receiving (110) a set of sensor input data from the sensor system (10);
- determining (120) a set of present working conditions of the working equipment arrangement (1) based on the received set of sensor input data;
- receiving (130) operator input data from the operator interface device (20);
- controlling (140) the load handling with the movable arm (3) based on the received operator input data and the determined set of present working conditions;
**characterized by:**
- generating (150) an instruction for an operator of the working equipment arrangement (1), the instruction being based on the set of present working conditions and being indicative of a recommended next operator input data; and
- transmitting (160) the generated instruction to an instruction interface device (40) arranged to provide the generated instruction to the operator.

2. The method of claim 1, wherein the instruction interface device (40) comprises an audio transducer and the method comprises providing the generated instruction to the operator in the form of spoken language.

3. The method of any preceding claim, wherein the instruction interface device (40) comprises an augmented reality device or a virtual reality device and the method comprises providing the generated instruction as a graphical overlay.

4. The method of any preceding claim, comprising:
- generating a set of instructions for an operator of the working equipment arrangement (1); and
- transmitting the generated set of instructions to the instruction interface device (40) arranged to provide the generated set of instructions to the operator.

5. The method of claim 4, comprising:
- transmitting the generated set of instructions in a sequence to the instruction interface device (40) arranged to provide the generated set of instructions to the operator.

6. The method of claim 5, wherein the generated set of instructions comprises a first recommended operator input data relating to a control of a first actuator (5) and a sequential second recommended operator input data relating to a control of a second actuator (5).

7. The method of claim 5 or 6, wherein the set of present working conditions correspond to the manipulator (7) being in a present position, the operator input data comprises a set of target working conditions that correspond to the manipulator (7) being in a predefined target position, and wherein the generated set of instructions comprise recommended operator input data to move the manipulator (7) from the present position to the target position.

8. The method of any preceding claim, wherein if the set of present working conditions comprises an alert state for the working equipment arrangement, then the generated instruction involves returning the working equipment arrangement to a non-alert state for operation.

9. The method of any preceding claim, wherein the generated instruction involves positioning at least one of the plurality of arm sections of the movable arm (3) for increasing lifting capacity.

10. The method of any preceding claim, wherein the operator input data comprises a set of target working conditions.

11. The method of any preceding claim, comprising managing a communication session between the working equipment arrangement (1) and a portable electronic device (50), such as a mobile phone, wherein said generating (150) an instruction for an operator of the working equipment arrangement is performed by the portable electronic device (50).

12. A computer program product comprising computer-executable instructions which, when executed by the portable electronic device (50), cause the portable electronic device (50) to carry out generating (150) an instruction for an operator of the working equipment arrangement (1), the instruction being based on the set of present working conditions and being indicative of a recommended next operator input data, of any preceding claim.

13. A use of the method (100) according to any of claims 1 to 11 for performing a test of the working equipment arrangement, such as a Vertical Stability Limit test for a working equipment arrangement in the form of a loader crane, wherein said use comprises an operator performing the test while utilising the transmitted generated instruction.

14. A working equipment arrangement (1) for load handling, comprising:
- a movable arm (3) for moving a load (9) from a first position to a second position and comprising a plurality of arm sections, pivot joints or telescopic connections joining the arm sections, a set of actuators (5) for operating movements of the arm sections, and a load manipulator (7) for engaging the load (9) during the load handling;
- a sensor system (10) comprising a plurality of sensor units (12) for monitoring present positions of the plurality of arm sections and for monitoring operational status of the working equipment arrangement (1);
- an operator interface device (20), such as a remote manoeuvring unit, for receiving operator input data for the load handling;
- a controller (30) arranged to:
- receive a set of sensor input data from the sensor system (10);
- determine a set of present working conditions of the working equipment arrangement (1) based on the received set of sensor input data;
- receive operator input data from the operator interface device (20);
- control the load handling with the movable arm (3) based on the received operator input data and the set of present working conditions;
**characterized in that** the working equipment arrangement (1) is arranged to:
- generate an instruction for an operator of the working equipment arrangement (1), the instruction being based on the set of present working conditions and being indicative of at least one recommended operator input data; and
- transmit the generated instruction to an instruction interface device (40) arranged to provide the generated instruction to the operator.

15. The working equipment arrangement of claim 14, wherein the working equipment arrangement (1) is a loader crane configured to be mounted on a vehicle and for loading the load (9) onto the vehicle and unloading the load (9) from the vehicle.
